# FASCICULE DE BREVET EUROPEEN

(11) **EP 1 244 316 B1**
(45) Date de publication et mention de la délivrance du brevet: **26.05.2010**
(21) Numéro de dépôt: 02290669.7
(22) Date de dépôt: 18.03.2002
(51) Int. Cl.: H04W 36/08, H04W 36/36

(54) **Reselection de cellule dans un système cellulaire de radiocommunications mobiles en mode paquet**
Zellwiederauswahl in einem mobilen Funkübertragungssystem im Packet-Modus
Cell reselection in a mobile radiocommunication system in packet mode

(30) Priorité: 19.03.2001 FR 0103713
(43) Date de publication de la demande: 25.09.2002
(73) Titulaire: Alcatel Lucent, 75008 Paris (FR)
(72) Inventeur: Landais, Bruno, 22560 Pleumeur-Bodou (FR); Muniere, Vincent, 75015 Paris (FR)
(74) Mandataire: El Manouni, Josiane

(56) Documents cités:
- EP-A- 1 081 969
- WO-A-00/27158
- WO-A-01/47298

## Description

La présente invention concerne d`urte manière genérale les systèmes cellulaires de radiocommunications mobiles.

Des exemples de systèmes cellulaires de radiocommunications mobiles peuvent être trouvés dans les documents suivants :
- Le document EP -A-1 081 969 décrit des systèmes cellulaires de radio communication avec « handover », selon les caractéristiques du préambule des revendications 1,13 et 14.
- Le document WO 00/27158 A décrit un traitement de mode veille (« idle mode ») dans un réseau hybride GSM/CDMA.
- Le document WO 01/47298 A, état de la technique que défini à l'article 54(3) CBE et donc non publié à la date de la présente demande, décrit une re-sélection pour réseaux de données paquet temps réel.

La présente invention concerne plus particulièrement les services en mode paquet, tels que notamment le GPRS (pour "General Packet Radio Service" en anglais) pour les systèmes de radiocommunications mobiles de type GSM (pour "Global System for Mobile communications" en anglais).

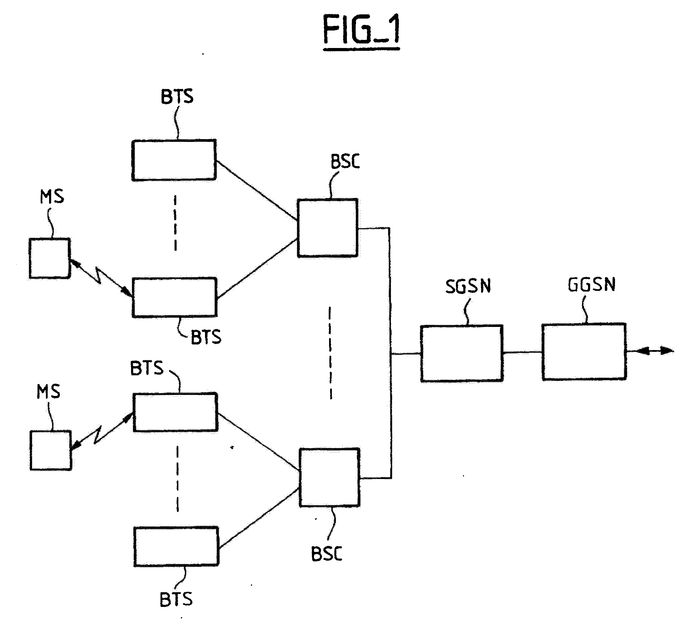

L'architecture des systèmes en mode paquet tels que par exemple les systèmes de type GPRS est rappelée sur la figure 1, elle comporte essentiellement :
- des stations de base ou BTS (pour "Base Transceiver Station" en anglais), en relation avec des stations mobiles ou MS (pour « Mobile Station » en anglais), et des contrôleurs de stations de base ou BSC (pour "Base Station Controller" en anglais), l'ensemble formé par les BTS et BSC étant aussi appelé BSS (pour "Base Station Subsystem" en anglais), ou plus généralement réseau d'accès radio, on RAN (pour « Radio Access Network »),
- des entités telles que le entités SGSN (pour "Serving GPRS Support Node" en angtois), en relation d'une part avec le BSS, et d'autre parti avec des entités GGSN (pour « Gateway GPRS Support Node » en anglais), elles-mêmes en relation avec des réseaux extérieurs (non illustrés), l'ensemble formé par les SGSN et GGSN étant aussi appelé NSS, pour « Network Sub-System ») ou plus généralement réseau de coeur, ou CN, pour « Core Network ».

Selon l'architecture en couches utilisée pour décrire ces systèmes, on distingue, sur l'interface « Um » entre MS et BBS:
- une première couche, ou couche physique,
- une deuxième couche, ou couche liaison, elle-même divisée en plusieurs couches: par ordre de niveaux croissants, MAC (pour « Médium Access Control » en anglais), RLC (pour « Radio Link Control » en anglais) et LLC (pour « Logical Link Control » en anglais).

De même, on distingue, sur l'interface « Gb » entre BSS et SGSN:
- une première couche, ou couche phasique,
- une deuxième couche, ou couche liaison, elle-même divisée en plusieurs couches : par ordre de niveaux croissants, « Frame Relay » (en anglais), BSSGP (pour « BSS GPRS Protocol» en anglais), et LLC (pour « Logical Link Control » en anglais).

Des trames appelées trames LLC (ou « LLC frames » en anglais) sont formées, dans la couche LLC, à partir d'unités de données de niveau supérieur. Dans les trames LLC ces unités de données sont appelées unités de données LLC-PDU (pour « LLC-Protocol Data Units » en anglais).

Les unités de données LLC-PDU sont ensuite segmentées dans la couche MAC/RLC, de manière à former des blocs appelés blocs de données RLC (ou « RLC data blocks » en anglais). Les blocs de données RLC sont ensuite mis au format requis pour transmission sur l'interface « Um », dans la couche physique.

En outre, dans les couches RLC et LLC sont mises en oeuvre des procédures de re-transmission de données non correctement reçues (blocs de données RLC ou unités de données LLC-PDU selon le cas), selon une technique appelée aussi ARQ (pour "Automatic Repeat reQuest" en anglais). L'état, correct ou non, des blocs ou unités de données reçus est signalé par le récepteur à l'émetteur au moyen de messages dits d'acquittement (ou ACK, pour "ACKnowledgment" en anglais) ou de non-acquittement (ou NACK, pour "Non-ACKnowledgment" en anglais).

En outre, des protocoles de signalisation de niveau supérieur sont également prévus, notamment pour la gestion des ressources radio ou GRR (pour « GPRS Radio Resource Management » en anglais), la gestion de la mobilité ou GMM (pour « GPRS Mobility Management» en anglais), la gestion de session ou SM (pour « Session Management» en anglais), ...etc.

Notamment, selon le protocole GMM, on définit trois états possibles pour une station mobile, à savoir l'état « Idle State », l'état « Standby State », et l'état « Ready State ».

Pour une description plus détaillée de ces systèmes, on pourra se référer aux normes correspondantes, publiées par les organismes de normalisation correspondants.

Par ailleurs, ces systèmes ont une architecture cellulaire, et des techniques de transfert inter-cellulaire sont prévues pour transférer les communications en mode circuit de cellule à cellule selon les besoins.

Pour les services en mode paquet, on utilise généralement une procédure dite de resélection de cellule, et on distingue généralement plusieurs modes de contrôle de resélection de cellule, correspondant à des degrés d'autonomie décroissants de la station mobile, ou, ce qui revient au même, à des degrés de contrôle croissants par le réseau. Par exemple, dans le cas du GPRS, comme spécifié dans les normes 3GPP TS 05.08 et 3G TS 04.60 publiées par le 3GPP (« 3^{rd} Generation Partnership Project »):
- Suivant un premier mode de contrôle (appelé aussi NC0), la station mobile décide de manière autonome d'effectuer un tel transfert et sélectionne elle-même la cellule cible vers laquelle la communication est à transférer, en tenant compte des résultats de mesures qu'elle effectue.
- Suivant un deuxième mode de contrôle ( appelé aussi NCl), la station mobile décide de manière autonome d'effectuer un tel transfert et sélectionne elle-même la cellule cible vers laquelle la communication est à transférer, en tenant compte de résultats de mesures qu'elle effectue, et transmet par ailleurs les résultats de ces mesures au réseau.
- Suivant un troisième mode de contrôle (appelé aussi NC2), le réseau décide d'effectuer un tel transfert et sélectionne la cellule cible vers laquelle la communication est à transférer, en tenant compte des résultats de mesures que lui transmet la station mobile.

Le mode de contrôle NC2 est aussi appelé resélection de cellule contrôlée par le réseau. Dans ce cas, une resélection de cellule est ordonnée par le réseau à la station mobile, dans un message appelé « Packet Cell Change Order» contenant l'identité de la cellule resélectionnée.

Les modes de contrôle NC0 et NC1 correspondent ainsi à un mode de resélection de cellule contrôlé par la station mobile. Dans ce cas la station mobile décide elle-même d'une resélection de cellule.

En outre, une procédure dite de « Cell Change Notification » (ou CCN) a été définie, dans la norme 3G TS 04.60, pour le cas de stations mobiles opérant suivant les modes NC0 et NC1. Dans ce cas, la station mobile ayant décidé une resélection de cellule informe le réseau (BSS), dans un message appelé « Packet Cell Change Notification », de la cellule re-sélectionnée qu'elle propose. En réponse, le réseau peut notamment lui indiquer la cellule resélectionnée choisie, dans un message « Packet Cell Change Order » contenant l'identité de cette cellule. Le mode de contrôle correspondant est aussi appelé resélection de cellule assistée par le réseau.

Une fois qu'une cellule cible a été déterminée par la station mobile, ou ordonnée par le réseau, suivant l'un ou l'autre de ces modes de contrôle, la station mobile doit effectuer certaines opérations nécessaires pour se connecter, en mode paquet, à cette cellule cible.

Notamment, il est nécessaire que la station mobile accède à cette cellule, et notamment qu'elle acquière certaines informations appelées aussi informations système (ou « system information » en anglais), diffusées sur un canal commun dans cette cellule cible, ce canal commun pouvant être, comme spécifié également dans le document précité, le canal PBCCH (pour « Packet Broadcast Control Channel » en anglais) ou le canal BCCH (pour « Broadcast Control Channel » en anglais). Dans le cas où le canal PBCCH est utilisé, ces informations système sont appelées informations système paquet (ou « Packet system information » en anglais). Ces informations système incluent notamment des informations indiquant à la station mobile comment accéder en mode paquet à cette cellule cible. En effet, contrairement à la procédure de « handover » prévue dans le cas du mode circuit, les ressources à utiliser dans la cellule cible ne sont pas pré-déterminées par le réseau. Ces informations système incluent un certain nombre de paramètres permettant de configurer la re-sélection de cellule. Un certain nombre d'informations système sont nécessaires avant que la station mobile ne soit autorisée à faire un accès dans la cellule cible et diffèrent selon qu'elles sont transportées sur le canal PBCCH ou le BCCH.

Or le mode de diffusion de ces informations système nécessaires, sur le canal PBCCH ou BCCH, est tel que le temps d'acquisition de ces informations par la station mobile peut être extrêmement long, et n'est en outre pas pré-déterminé. Le transfert de données dans le sens descendant peut alors s'en trouver affecté. En effet, le SGSN continue à transférer des unités de données LLC-PDU au BSS qui tente de les délivrer à la station mobile sous forme de blocs de données RLC. Mais comme la station mobile est en train d'acquérir les informations système relatives à la cellule cible, beaucoup de blocs de données RLC seront perdus, c'est-à-dire ne seront pas reçus par la station mobile. En effet, comme spécifié dans la norme 3G TS 04.60, la station mobile est alors autorisée à suspendre les opérations en cours dans l'ancienne cellule, pendant la durée nécessaire, afin de recevoir les messages requis sur le BCCH ou PBCCH de la cellule cible. De nombreuses re-transmissions peuvent alors être nécessaires au niveau de la couche RLC/MAC et/ou de la couche LLC, ce qui a essentiellement pour inconvénients de retarder le transfert de données (et donc de dégrader la qualité de service), et de ne pas correspondre à une utilisation optimale des ressources radio. La station mobile peut aussi à tout moment basculer dans la cellule cible, auquel cas il serait vain de vouloir poursuivre le transfert dans le sens desendant dans l'ancienne cellule. Ce pourrait même être préjudiciable puisque les PDUs qui seraient émis en mode LLC non acquitté seraient tout simplement perdus.

Pour limiter ces inconvénients, selon la norme 3GPP TS 08.18, dans le cas où le BSS a ordonné une re-sélection de cellule à une station mobile, le BSS peut demander au SGSN d'interrompre temporairement le transfert de données vers le BSS pour permettre à la station mobile d'effectuer les opérations nécessaires pour se connecter, en mode paquet, à la cellule cible re-sélectionnée. Le message par lequel le BSS fait une telle demande au SGSN est appelé « BSSGP RADIO STATUS PDU » avec la cause « cell reselection ordered ».

Une fois que la station mobile a effectué avec succès les opérations nécessaires pour se connecter en mode paquet à la cellule cible resélectionnée, elle transmet au réseau, selon le protocole de gestion de mobilité ou GMM (pour « GPRS Mobility Management ») un message dit de mise à jour de cellule indiquant l'identité de la cellule cible resélectionnée. A la réception de ce message, le SGSN peut alors reprendre le transfert de données interrompu.

Ainsi que l'a observé le demandeur, des problèmes peuvent cependant se poser.

En effet, dans certaines situations la station mobile ne peut envoyer de message de mise à jour de cellule au SGSN, et le SGSN ne peut alors reprendre le transfert.

Une première situation correspond au cas de mode de resélection de cellule assisté par le réseau, c'est-à-dire au cas où la procédure dite de « Cell Change Notification » (ou CCN ) s'applique à une station mobile opérant suivant le mode de contrôle NC0 ou NC1. Dans ce cas le BSS étant, comme dans le mode de contrôle NC2, au courant de la re-sélection de cellule, il peut aussi transmettre au SGSN un message « BSSGP RADIO STATUS » avec la cause « cell reselection ordered», et le SGSN peut donc aussi suspendre le transfert dans le sens descendant.
Cependant, il est possible qu'avant le changement de cellule vers la cellule ainsi resélectionnée, la station mobile décide de rester dans la cellule courante, du fait de changement intervenu dans les conditions radio. Dans ce cas, la station mobile n'envoie pas de message de mise à jour de cellule au SGSN, qui ne peut alors reprendre le transfert.

Une deuxième situation correspond au cas de station mobile opérant suivant le mode de contrôle NC2. Le BSS peut alors transmettre au SGSN un message « BSSGP RADIO STATUS » avec la cause « cell reselection ordered», et le SGSN peut donc suspendre le transfert dans le sens descendant. Cependant, selon les différents états possibles pour une station mobile selon le protocole de gestion de mobilité ou GMM, il se peut que la station mobile soit alors passée de l'état « Ready State » à l'état « Standby State». Or dans l'état « Standby State », d'après la norme 3G TS 05.08, la station mobile ne peut pas utiliser le mode NC2, mais elle doit utiliser le mode NC0 ou le mode NC1. Dans ce cas, la station mobile n'envoie pas de message de mise à jour de cellule au SGSN, qui ne peut alors reprendre le transfert.

Ces situations correspondent ainsi à des situations pour lesquelles le processus de resélection de cellule est arrêté ou abandonné.

En dehors de ces situations, la resélection de cellule peut aussi ne pas aboutir pour d'autres raisons, notamment parce que la station mobile ne peut accéder à la cellule resélectionnée, ou parce qu'il n'y a pas de ressources disponibles dans cette cellule. Il est par ailleurs prévu par la norme 3G TS 04.60 que la station mobile envoie au réseau un message « Packet Cell Change Failure » indiquant au réseau qu'une resélection de cellule commandée par le réseau a échoué, la norme ne spécifiant pas ce qui doit être fait dans ce cas. En outre un tel message est émis de la station mobile vers le BBS sans acquittement du BSS, et il n'y a donc aucune garantie qu'il soit reçu par le BSS.

Le demandeur s'est intéressé à ces problèmes, et à déterminer une meilleure solution pour les résoudre.

Plusieurs solutions pourraient ainsi être envisagées.

Une première solution consisterait à ne pas transmettre le message « BSSGP RADIO STATUS » avec la cause « cell reselection ordered». Mais dans ce cas le transfert ne serait pas suspendu pendant que la station mobile essaye de se connecter à la cellule cible resélectionnée, et il est alors très possible que des blocs de données LLC PDU dans le sens descendant soient perdus car le BSS ne peut les transmettre à la station mobile.

Une deuxième solution consisterait à reprendre le transfert dans le sens descendant, soit à la réception d'un message de mise à jour de cellule (dans le cas où les opérations nécessaires à la connexion à la cellule cible resélectionnée ont été effectuées avec succès), soit à l'expiration d'un délai donné (pour le cas où ces opérations ne peuvent être effectuées avec succès). Mais une reprise du transfert basée sur l'expiration d'un délai peut conduire soit à perdre des blocs LLC PDU dans le sens descendant, si le délai est trop court (c'est-à-dire si la station mobile est encore en train d'essayer de se connecter à la cellule re-sélectionnée), soit à retarder inutilement la reprise du transfert si le délai est trop long et la re-sélection de cellule a déjà échoué.

Une troisième solution consisterait pour le SGSN, lorsqu'il a encore des blocs de données LLC PDU à transmettre dans le sens descendant, à rechercher la station mobile dans la zone de routage (ou « routing area ») ou dans la zone de BSS (ou « BSS area ») où il reçoit un message « BSSGP RADIO STATUS » avec la cause « cell reselection ordered». Ceci conduit cependant à augmenter le nombre de messages de recherche (ou « paging messages ») envoyés sur l'interface radio, et à différer la reprise du transfert de données dans le sens descendant jusqu'au moment où la station mobile répond avec succès à une telle requête de « paging ». En outre dans le cas où il y a un transfert de données en cours dans le sens descendant dans la cellule serevuse courante et dans le cas où la resélection de cellule est abandonnée ou échoue, le BSS n'est pas alors capable (dans l'état actuel de la norme) d'envoyer des messages de « paging» sur les ressources PDCH (« Packet Data Channel») allouées à la station mobile.

Ainsi, ces diverses solutions ne permettent pas de résoudre ces problèmes de manière optimale.

La présente invention propose une autre approche permettant notamment d'éviter les divers inconvénients mentionnés précédemment.

Un des objets de la présente invention est ainsi un procédé de resélection de cellule dans un système cellulaire de radiocommunications mobiles en mode paquet, procédé comportant une étape au cours de laquelle une station mobile connectée en mode paquet à une cellule serveuse initiale tente de se connecter en mode paquet à une cellule cible resélectionnée, ce procédé étant essentiellement caractérisé en ce que dans le cas où la station mobile ne peut se connecter à la cellule cible resélectionnée, elle transmet au réseau une information de mise à jour de cellule, en indiquant comme nouvelle cellule la cellule serveuse initiale.

Suivant une autre caractéristique, le transfert de données dans le sens descendant étant en outre interrompu pour permettre à la station mobile de se connecter en mode paquet à la cellule cible resélectionnée, ce transfert de données est repris à la réception par le réseau de ladite information de mise à jour de cellule.

Suivant une autre caractéristique, ladite information de mise à jour de cellule est transmise dans le cas de station mobile opérant suivant un mode de resélection de cellule assisté par le réseau, et ayant successivement décidé, avant ladite interruption de transfert, de resélectionner une cellule, puis après ladite interruption de transfert, de ne pas resélectionner de cellule.

Suivant une autre caractéristique, ladite information de mise à jour de cellule est transmise dans le cas de station mobile opérant, avant ladite interruption de transfert, suivant un mode de resélection de cellule contrôlé par le réseau, puis après ladite interruption de transfert, suivant un mode de re-sélection de cellule contrôlé par la station mobile.

Suivant une autre caractéristique, ladite information de mise à jour de cellule est transmise dans le cas de station mobile ne pouvant accéder à la cellule cible resélectionnée.

Suivant une autre caractéristique, ladite information de mise à jour de cellule est transmise dans le cas de manque de ressource dans la cellule cible resélectionnée.

Suivant une autre caractéristique, le transfert de données interrompu est un transfert de données d'une entité appartenant au réseau de coeur dudit système, vers une entité appartenant au réseau d'accès radio dudit système.

Suivant une autre caractéristique, dans un système de type GSM/GPRS, ladite entité appartenant au réseau de coeur dudit système est une entité de type SGSN (« Serving GPRS Support Node »).

Suivant une autre caractéristisque, dans un système de type GSM/GPRS, ladite entité appartenant au réseau d'accès radio dudit système est une entité de type BSS (« Base Station Sub-system»).

Suivant une autre caractéristique, ladite information de mise à jour de cellule est transmise via un message de mise à jour de cellule du même type que celui utilisé dans le cas où la station mobile peut se connecter à la cellule cible resélectionnée, ce message indiquant dans ce dernier cas comme nouvelle cellule la cellule cible resélectionnée.

Suivant une autre caractéristique, dans un système de type GSM/GPRS, ledit message est un message de type « Cell Update ».

Suivant une autre caractéristique, ledit message est émis en mode acquitté.

Un autre objet de la présente invention est un système de radiocommunications mobiles comportant des moyens pour mettre en oeuvre un tel procédé.

Un autre objet de la présente invention est une entité de réseau de radiocommunications mobiles comportant des moyens pour mettre en oeuvre un tel procédé.

Un autre objet de la présente invention est une station mobile comportant des moyens pour mettre en oeuvre un tel procédé.

D'autres objets et caractéristiques de la présente invention apparaîtront à la lecture de la description suivante d'une exemple de réalisation, faite en relation avec les dessins ci-annexés dans lesquels:
- la figure 1 (décrite précédemment) est un schéma destiné à rappeler l'architecture générale d'un système cellulaire de radiocommunications mobiles de type GPRS,
- la figure 2 est un schéma destiné à illustrer un exemple de procédé suivant l'invention.

Un des objets de la présente invention est donc un procédé de resélection de cellule dans un système cellulaire de radiocommunications mobiles en mode paquet. Comme rappelé précédemment, on prévoit généralement une étape au cours de laquelle une station mobile connectée en mode paquet à une cellule serveuse tente de se connecter en mode paquet à une cellule cible resélectionnée.

Comme rappelé précédemment, dans l'état actuel de la norme, il est prévu qu'une station mobile envoie au réseau soit un message (en mode non acquitté) indiquant qu'elle ne réussit pas à se connecter à la cellule cibleresélectionnée, soit un message de mise à jour de cellule ( indiquant l'identité de la cellule cible resélectionnée) dans le cas où elle réussit à se connecter à cette cellule cible.

La présente invention propose une autre approche, selon laquelle, dans le cas où la station mobile ne peut se connecter à la cellule cible resélectionnée, elle transmet au réseau une information de mise à jour de cellule, en indiquant comme nouvelle cellule sa cellule serveuse.

En d'autres termes, selon la présente invention, la station mobile transmet dans tous les cas une information de mise à jour de cellule, mais l'identité de la nouvelle cellule n'est pas la même suivant que la station mobile a réussi ou non à se connecter à la cellule cible.

En outre, une telle information de mise à jour de cellule est transmise en mode acquitté (en l'occurrence sur un TBF (« Temporary Block Flow ») en mode RLC acquitté) et est donc bien reçue par le BSS.

Avantageusement, dans le cas où le transfert dans le sens descendant est interrompu pour permettre à la station mobile de se connecter en mode paquet à la cellule cible resélectionnée, ce transfert est repris à la réception par le réseau de ladite information de mise à jour de cellule.

Ceci permet notamment d'éviter les inconvénients mentionnés précédemment pour ce mode de fonctionnement. La présente invention n'est cependant pas limitée à ce cas de fonctionnement.

Suivant un exemple, ladite information de mise à jour de cellule est transmise dans le cas de station mobile opérant, comme expliqué précédemment, suivant un mode de resélection de cellule assisté par le réseau, et ayant successivement décidé, avant puis après ladite interruption de transfert, de resélectionner une cellule puis de ne pas resélectionner de cellule.

Suivant un autre exemple, ladite information de mise à jour de cellule est transmise dans le cas de station mobile opérant, comme expliqué précédemment, suivant un mode de resélection de cellule contrôlé par le réseau avant ladite interruption de transfert, puis suivant un mode de resélection de cellule contrôlé par la station mobile après ladite interruption de transfert.

Suivant un autre exemple, ladite information de mise à jour de cellule est transmise dans le cas de station mobile ne pouvant accéder à la cellule cible resélectionnée.

Suivant un autre exemple, ladite information de mise à jour de cellule est transmise dans le cas de manque de ressource dans la cellule cible resélectionnée.

D'autres exemples seraient bien entendu possibles, et l'invention s'applique bien entendu dans tous les cas où la station mobile ne réussit pas à se connecter à la cellule cible, quelle qu'en soit la raison.

Le transfert de données interrompu est généralement un transfert d'une entité appartenant au réseau de coeur dudit système, vers une entité appartenant au réseau d'accès radio dudit système.

Notamment, dans un réseau de type GSM/GPRS, ladite entité appartenant au réseau de coeur dudit système est une entité de type SGSN (« Serving GPRS Support Node »).

Notamment, dans un réseau de type GSM/GPRS, ladite entité appartenant au réseau d'accès radio dudit système est une entité de type BSS (« Base Station Subsystem»).

Avantageusement, ladite information de mise à jour de cellule est transmise via un message de mise à jour de cellule du même type que celui utilisé dans le cas où la station mobile peut se connecter à la cellule cible resélectionnée, ce message indiquant dans ce dernier cas comme nouvelle cellule la cellule cible resélectionnée.

Notamment, dans un système de type GSM/GPRS, ledite message est un message de type « Cell Update ».

Notamment un tel message est émis en mode acquitté.

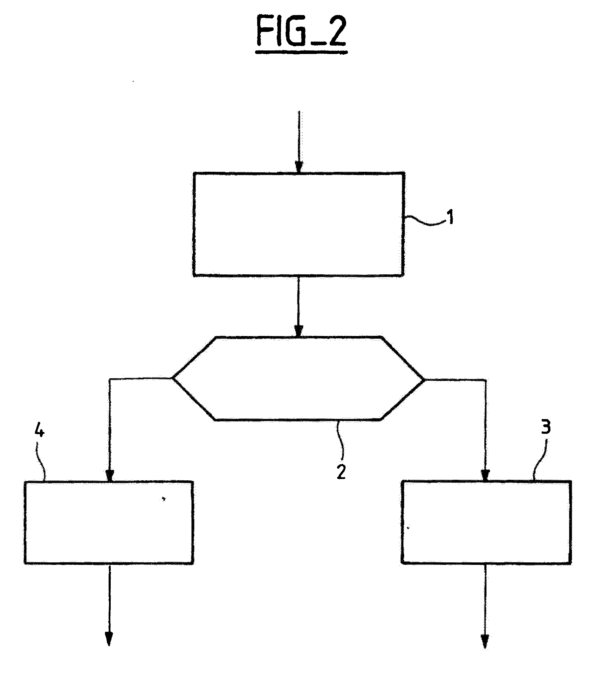

Dans l'exemple illustré sur la figure 2, on a illustré une étape 1 correspondant à une étape selon laquelle la station mobile tente de se connecter à une cellule cible resélectionnée. Dans une étape 2, on détermine si la station mobile a effectué avec succès les opérations nécessaires à une telle connexion. Si la réponse est non, dans une étape 3 la station mobile transmet au réseau, dans sa cellule serveuse, une information de mise à jour de cellule, en indiquant comme nouvelle cellule cette cellule serveuse. Si la réponse est oui, dans une étape 4 la station mobile transmet au réseau une information de mise à jour de cellule, en indiquant comme nouvelle cellule la cellule cible resélectionnée.

La figure ainsi décrite ne représente que très schématiquement un exemple de procédé suivant l'invention, sans entrer dans le détail des procédures ou protocoles de signalisation, qui peuvent par ailleurs faire appel à des principes connus dans ces systèmes.

La présente invention a également pour objet, outre un tel procédé, un système cellulaire de radiocommunications mobiles, ainsi qu'un réseau cellulaire de radiocommunications ou une entité ou équipement de réseau cellulaire de radiocommunications mobiles, et uns station mobile, comportant des moyens de mise en oeuvre d'un tel procédé.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé de resélection de cellule dans un système cellulaire (MS, BTS, BSC, SGSN, GGSN) de radiocommunications mobiles en mode paquet, procédé comportant une étape (1) au cours de laquelle une station mobile (MS) connectée en mode paquet à une cellule serveuse initiale tente de se connecter en mode paquet à une cellule cible resélectionnée, ce procédé étant **caractérisé en ce que** dans le cas où la station mobile une peut se connecteur à la cellule cible resélectionnée, ladite station mobile transmet (3) au réseau une information de mise à jour de cellule, en indiquant comme nouvelle cellule la cellule serveuse initiale.

2. Procédé selon la revendication 7, **caractérisé en ce que** le transfert de données dons le sens descendant étant en outre interrompu pour permettre à la station mobile de se connecter en mode paquet à la cellule cible re-sélectionnée, lendit transfert de données est repris à la réception de ladite information de mise à jour de cellule.

3. Procédé selon la revendication 2, **caractérisé en ce que** ladite information de mise à jour de cellule est transmise dans le cas de station mobile opérant suivant un mode de resélection de cellule assisté par le réseau, et ayant successivement décidé, avant puis après ladite interruption, due resélectionner use cellule puis de ne pas resélectionner de cellule.

4. Procédé selon la revendication 2, **caractérisé en ce que** ladite information de mise à jour de cellule es transmise dans le cas de station mobile opérant suivant un mode de resélection de cellule contrôlé par le réseau avant ladite interruption, plus suivant un mode de ré-sélection de cellule contrôlé par la station mobile après ladite interruption.

5. Procédé selon l'une des revendications 1 et 2, **caractérisé en ce que** ladite information de mise à jour de cellule est transmise dans le cas de station mobile ne pouvant accéder à la cellule cible resélectionnée.

6. Procedé selon l'une des revendications 1 et 2, **caractérisé en ce que** ladite information de mise à jour de cellule est transmise dans le cas de manque de ressource dans la cellule cible resélectionnée.

7. Procédé selon la revendication 2, **caractérisé en ce que**, le transfert de données interrompu est un transfert d'un entité appartenant au réseau de coeur (SGSN, GGSN) dudit système, vers une entité appartenant au réseau d'accès radio (BTS, BSC) dudit systéme.

8. Procédé selon la revendication 7, **caractérisé en ce que**, dans un réseau de type GSM/GPRS, ladite entité appartenant au réseau de coeur dudit système est une entité de type SGSN « Serving GARS Support Node ».

9. Procédé selon la revendication 7, **caractérisé en ce que**, dans un réseau de type GSM/GPRS, ladite entité appartenant au réseau d'accès radio dudit système est une entité de type BSS « Base Station Sub-system».

10. Procédé selon l'une des revendications 1 à 7, **caractérisé en ce que** ladite information de mise à jour de cellule est transmise via un message de mise à jour de cellule du même type que celui utilisé dans le cas où la station mobile peut se connecter à la cellule cible resélectionnée, ce message indiquant dans ce dernier cas comme nouvelle cellule la cellule cible resélectionnée.

11. Procédé selon la revendication 10, **caractérisé en ce que**, dans un système de type GSM/CPRS, ledit message est un message de type « Cell Update »,

12. Procédé selon l'une des revendications 10 et 11, **caractérisé en ce que** ledit message est émis en mode acquitté.

13. Système cellulaire de radiocommunications mobiles en mode paquet (MS, BTS, BSC, SGSN, GGSN) comportant des moyens pour mettre en oeuvre une étape (1) ou cours de laquelle une station mobile (MS) connectée en mode paquet à une cellule serveuse initiale tente de se connecter en mode paquet à une cellule cible resélectionnée, ledit système étant **caractérisé en ce qu'**il comporte des moyens pour mettre en oeuvre une étape (3) selon laquelle, dans le cas où la station mobile ne peut se connecter à la cellule cible resélectionnée, ladite station mobile transmet ou réseau une information de mise à jour de cellule, en indiquant comme nouvelle cellule la cellule serveuse initiale.

14. Station mobile (MS) pour un système cellulaire (MS, BTS, BSC, SGSN, GGSN) de radiocommunications mobiles en mode paquet, ladite station mobile comportant des moyens pour mettre en oeuvre une étape au cours de laquelle la station mobile connectée en mode paquet à une cellule serveuse initiale tente de se connecter en mode paquet à une cellule cible resélectionnée, ladite station mobile étant **caractérisée en ce qu'**elle comporte des moyens pour mettre en oeuvre une étape selon laquelle, dons le cas où la station mobile ne peut se connecter à la cellule cible resélectionnée, ladite station mobile transmet au réseau une information de mise à jour de cellule, en indiquant comme nouvelle cellule la cellule serveuse initials.

## Claims

1. A method for reselecting a cell in a packet-mode mobile radio communication cellular system (MS, BTS, BSC, SGSN, GGSN), which method comprises a step (1) during which a mobile station (MS) connected in packet mode to an initial serving cell, attempts to connect in packet mode to a reselected target cell, said method being **characterized in that** if the mobile station cannot connect to the reselected target cell, said mobile station transmits (3) to the network cell update information indicating the initial serving cell as the new cell,

2. A method according to claim 1, **characterized in that** the downlink transfer of data being further interrupted to enable the mobile station to connect in packet mode to the respected target cell, said transfer of data is resumed upon receiving said cell update information.

3. A method according to claim 2, **characterized in that** said cell update information is transmitted if the mobile station is operating in accordance with a network-assisted cell reselection mode, and had subsequently decided, before and then after said interruption, to reselect a cell and then to not reselect the cell.

4. A method according to claim 2, **characterized in that** said cell update information is transmitted if the mobile station is operating in accordance with a network-assisted cell reselection mode before said interruption, then according to a mobile station-controlled cell reselection mode after said interruption.

5. A method according to one of the claims 1 or 2, **characterized in that** said cell update information is transmitted if the mobile station cannot access the reselected target cell.

6. A method according to one of the claims 1 or 2, **characterized in that** said cell update information is transmitted if there is a lack of resources within the reselected target cell.

7. A method according to claim 2, **characterized in that** the interrupted data transfer is a transfer from an entity belonging to the core network (SGSN, GGSN) of said system to an entity belonging to the radio access network (BTS, BSC) of said system.

8. A method according to claim 7, **characterized in that**, in a GSM/GPRS network, said entity belonging to the core network of said system is an SGSN "Serving GPRS Support Node" entity.

9. A method according to claim 7, **characterized in that**, in a GSM/GPRS network, said entity belonging to the radio access network of said system is a BSS "Base Station Subsystem" entity.

10. A method according to one of the claims 1 to 7, **characterized in that** said cell update information is transmitted via a cell update message of the same type as the one used if the mobile station can connect to the reselected target cell, in which case this message indicates the reselected target cell as the new cell.

11. A method according to claim 10, **characterized in that**, in a GSM/GPRS system, said message is a "Cell Update" type message.

12. A method according to one of the claims 10 and 11, **characterized in that** said message is sent in acknowledged mode.

13. A packet-mode mobile radio communication cellular system (MS, BTS, BSC, SGSN, GGSN) comprising means for implementing a step (1) during which a mobile station (MS) connected in packet mode to an initial serving cell attempts to connect in packet mode to a reselected target cell, said system being **characterized in that** it comprises means for implementing a step (3) during which, if the mobile station cannot connect to the reselected target cell, said mobile station transmits to the network cell update information indicating the initial serving cell as the new cell.

14. A mobile station (MS), for a packet-mode mobile radio communication cellular system (MS, BTS, BSC, SGSN, GGSN), said mobile station comprising means for implementing a step during which the mobile station connected in packet mode to an initial serving cell attempts to connect in packet mode to a reselected target cell, said mobile station being **characterized in that** it comprises means for implementing a step during which, if the mobile station cannot connect to the reselected target cell, said mobile station transmits to the network cell update information indicating the initial serving cell as the new cell.

## Patentansprüche

1. Verfahren zur Wiederauswahl einer Zelle in einem paketorientierten zellularen Mobilfunkkommunikationssystem (MS, BTS, BSC, SGSN, GGSN), wobei das Verfahren einen Schritt (1) umfasst, während welchem eine Mobilstation (MS), die im Paketmodus mit einer ursprünglichen bedienende Zelle verbunden ist, versucht, eine paketorientierte Verbindung mit einer wiederausgewählten Zielzelle herzustellen, wobei dieses Verfahren **dadurch gekennzeichnet ist, dass**, wenn die Mobilstation keine Verbindung mit der wiederausgewählten Zielzelle herstellen kann, die besagte Mobilstation eine Zellenaklualisierungsinformation an das Netzwerk sendet (3), in welcher die ursprüngliche bedienende Zelle als neue Zelle angegeben wird.

2. Verfahren nach Anspruch 1, **dadurch gekennzeichnet, dass** die Downlink-Datenübertragung ferner unterbrochen wird, um es der Mobilstation zu ermöglichen, eine paketorientierte Verbindung mit der wiederausgewählten Zielzelle herzustellen, wobei die besagte Datenübertragung nach Empfang der besagten Zellenaktualisierungsinformation wieder aufgenommen wird.

3. Verfahren nach Anspruch 2, **dadurch gekennzeichnet, dass** die besagte Zellenaktualisierungsinformation übertragen wird, wenn die Mobilstation gemäβ einem vom Netzwerk unterstützten Zellenwiederauswahlmodus arbeitet und jeweils vor und nach der besagten Unterbrechung entschieden hat, eine Zelle, wiederauszuwählen und anschließend keine Zelle wiederauszuwählen.

4. Verfahren nach Anspruch 2, **dadurch gekennzeichnet, dass** die besagte Zellenaktualisierungsinformation übertragen wird, wenn die Mobilstation vor der besagten Unterbrechung gemäß einem vom Netzwerk gesteuerten Zellenwiederauswahlmodus arbeitet, und nach der besagten Unterbrechnung gemäß einem von der Mobilstation gesteuerten Zellenwiederauswahlmodus arbeitet.

5. Verfahren nach einem der Ansprüche 1 und 2, **dadurch gekennzeichnet, dass** die besagte Zellenaktualisierungsinformation übertragen wird, wenn die Mobilstation nicht auf die wiederausgewählte Zielzelle zugreifen kann.

6. Verfahren nach einen der Ansprüche 1 und 2, **dadurch gekennzeichnet, dass** die besagte Zellenaktualisierungsinformation übertragen wird, wenn in der wiederausgewahlten Zielzelle keine Resourcen verfügbar sind,

7. Verfahren nach Anspruch 2, **dadurch gekennzeichnet, dass** die unterbrochene Datenübertragung eine Übertragung von einer Entität, welche dem Kernnetz (SGSN, GGSN) des besagten Systems angehört, an eine dem Funkzugangsnetz (BTS, BSC) des besagten Systems angehörende Entität ist.

8. Verfahren nach Anspruch 7, **dadurch gekennzeichnet, dass**, in einem Netzwerk vom Typ GSM/GPRS, die besagte dem Kernnetz des besagten Systems angehörende Entität eine Entität vom Typ SGSM "Serving GPRS Support Node" ist.

9. Verfahren nach Anspruch 7, **dadurch gekennzeichnet, dass**, in einem Netzwerk vom Typ GSM/GPRS, die besagte dem Funkzugangsnetz des besagten Systems angehörende Entität eine Entität vom Typ BSS "Base Station Sub-system" ist.

10. Verfahren nach einem der Ansprüche 1 à 7, **dadurch gekennzeichnet, dass** die besagte Zellenaktualisierungsinformation in einer Zellenaktualisierungsnachricht desselben Typs wie der im Fall, dass die Mobilstation eine Verbindung mit der wiederausgewählten herstellen kann, verwendete Typ, übertragen wird, wobei diese Nachricht im letzteren Fall die wiederausgewählte Zielzelle als neue Zelle angibt.

11. Verfahren nach Anspruch 10, **dadurch gekennzeichnet, dass**, in einem System vom Typ GSM/GPRS, die Nachricht eine Nachricht vom Typ "Cell Update" ist.

12. Verfahren nach einem der Ansprüche 10 und 11, **dadurch gekennzeichnet, dass** die besagte Nachricht im quittierten Modus ausgegeben wird.

13. Paketorientiertes zellulares Mobilfunkkommunikationssystem (MS, BTS, BSC. SGSN, GGSN) mit Mitteln zum Ausführen eines Schrittes (1), während welchem eine im Paketmodus mit einer ursprünglichen bedienenden Zelle verbundene Mobilstation (MS) versucht, eine paketortentierte Verbindung zu einer wiederausgewählten Zielzelle herzustellen, wobei das besagte System **dadurch gekennzeichnet ist, dass** es Mittel zum Ausrühren eines Schrittes (3), während welchem, wenn die Mobilstation keine Verbindung zu der wiederausgewählten Zielzelle herstellen kann, die besagte Mobilstation eine Zellenaktualisierungsinformation an das Netzwerk überträgt, in welcher die urspringliche bedienende Zelle als neue Zelle angegeben wird.

14. Mobilstation (MS) für ein paketorientiertes zellulares Mobilfunkkommunikationssystem (MS, BTS, BSC, SGSN, GGSN), wobei die besagte Mobilstation Mittel zur Ausführen eines Schrittes umfasst, während weichem die im Paketmodus mit einer ursprünglichen bedienenden Zelle verbunden ist, versucht, eine paketorientierte Verbindung mit einer wiederausgewählten Zielzelle herzustellen, wobei die besagte Mobilstation **dadurch gekennzeichnet ist, dass** sie Mittel umfasst, um einen Schritt auszuführen, während welchem die Mobilstation, wenn sie keine Verbindung zu der wiederausgewählten Zielzelle herstellen kann, eine Zellenaktualisierungsinformation an das Netzwerk überträgt, in welcher die ursprüngliche bedienende Zelle als neue Zelle angegeben wird.
